(19) Europäisches Patentamt
European Patent Office
Office européen des brevets

(11) EP 0 912 092 B1

(12) **EUROPÄISCHE PATENTSCHRIFT**

(45) Veröffentlichungstag und Bekanntmachung des Hinweises auf die Patenterteilung:
**10.07.2002 Patentblatt 2002/28**

(21) Anmeldenummer: **97921771.8**

(22) Anmeldetag: **25.04.1997**

(51) Int Cl.[7]: **A01N 47/16**, A01N 37/18
// (A01N47/16, 37:14, 37:12, 37:10, 37:06, 37:04, 37:02), (A01N37/18, 37:14, 37:12, 37:10, 37:06, 37:04, 37:02)

(86) Internationale Anmeldenummer:
**PCT/EP97/02138**

(87) Internationale Veröffentlichungsnummer:
**WO 97/41728 (13.11.1997 Gazette 1997/49)**

(54) **ARTHROPODENREPELLENTS**

ARTHROPOD REPELLANT

AGENTS REPOUSSANT LES ARTHROPODES

(84) Benannte Vertragsstaaten:
**AT BE CH DE DK ES FI FR GB GR IT LI NL PT SE**

(30) Priorität: **06.05.1996 DE 19618089**

(43) Veröffentlichungstag der Anmeldung:
**06.05.1999 Patentblatt 1999/18**

(73) Patentinhaber: **BAYER AG**
**51368 Leverkusen (DE)**

(72) Erfinder:
- **KRÜGER, Bernd-Wieland**
  **D-51467 Bergisch Gladbach (DE)**
- **NENTWIG, Günther**
  **D-51381 Leverkusen (DE)**
- **RÖDER, Klaus**
  **D-51377 Leverkusen (DE)**

(56) Entgegenhaltungen:
**EP-A- 0 289 842** **WO-A-93/16594**
**DE-A- 3 842 232**

- **DATABASE WPI Section Ch, Week 8315 Derwent Publications Ltd., London, GB; Class D12, AN 83-36013K XP002039640 & JP 58 039 603 A (AGENCY OF IND SCI & TECHNOLOGY) , 8.März 1983**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 912 092 B1

## Beschreibung

Die vorliegende Erfindung betrifft Mittel zur Arthropodenabwehr auf Basis von Piperidin-Derivaten und Fettsäuren bzw. Fettsäurederivaten als Synergisten.

Es ist bekannt, daß bestimmte Piperidin-Derivate als Mittel zur Insekten- und Milbenabwehr eingesetzt werden können (vgl. EP-A 0 281 908 und EP-A 0 289 842). Ein erheblicher Nachteil der bekannten Repellents ist ihre zum Teil relativ kurz anhaltende Dauerwirkung.

Ebenfalls bekannt ist die Wirkungsverlängerung von bestimmten Repellents, wie z.B. von Deet® durch die Kombination mit Pflanzenölen und/oder Fettsäuren und/oder deren Estern (vgl. z.B. DE-A 38 42 232 und JP 042 44 001).
Auch diese Mischungen haben nicht immer eine zufriedenstellende Dauerwirkung.

Es wurde gefunden, daß Mischungen von Piperidin-Derivaten der Formel (I)

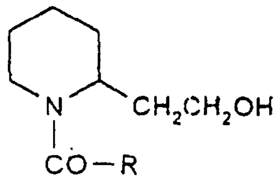
(I)

in welcher

R für Alkyl oder Alkoxy steht,

mit Fettsäuren und/oder Fettsäurederivaten als Synergisten gute arthropodenabwehrende Eigenschaften aufweisen.

Die Repellentwirkung der erfindungsgemäßen Mischungen ist erheblich höher, als die der reinen Piperidin-Derivate, wobei die Fettsäuren nicht nur eine additive, sondern eine synergistische Wirkungssteigerung bewirken.

Somit stellt die erfindungsgemäße Mischung eine wertvolle Bereicherung der Technik dar.

Die Piperidin-Derivate sind durch die Formel (I) allgemein definiert. Bevorzugt sind Verbindungen, in denen R für $C_1$-$C_4$-Alkyl oder $C_1$-$C_4$-Alkoxy steht. Besonders bevorzugt sind Verbindungen, in denen R für $C_3$-$C_4$-Alkyl oder $C_3$-$C_4$-Alkoxy steht.

Als ganz besonders bevorzugt erfindungsgemäß verwendbare Verbindungen der Formel (I) seien folgende Verbindungen genannt:

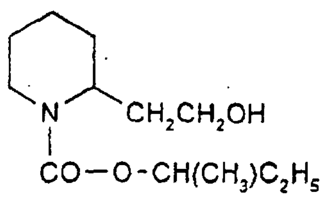
(I-1)

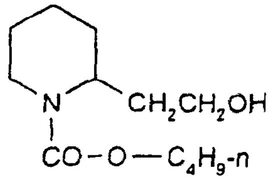
(I-2)

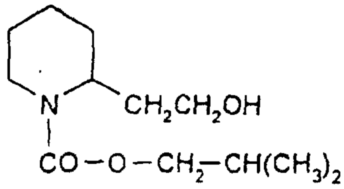

(I-3)

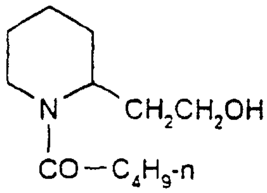

(I-4)

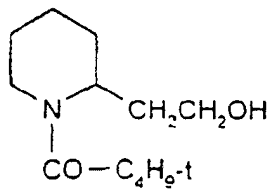

(I-5)

Die erfindungsgemäß verwendbaren Piperidin-Derivate sind bekannt (vgl. EP-A 0 281 908 und EP-A 0 289 842)

Als Synergisten kommen für die erfindungsgemäßen Mischungen vorzugsweise geradzahlige, geradkettige höhere Fettsäuren infrage, insbesondere $C_6$-$C_{18}$-Fettsäuren bzw. deren Derivate, wie insbesondere Fettsäureester.

Besonders bevorzugt genannt seien die Caprylsäure ($C_8$) und die Caprinsäure ($C_{10}$) sowie deren Alkylester, wie insbesondere die Methylester.

Die Fettsäuren bzw. ihre Derivate können einzeln oder in Mischungen verschiedener Fettsäuren/Fettsäurederivaten unterschiedlicher Zusammensetzungen eingesetzt werden.

Dabei ist es auch möglich, von vornherein Stoffe einzusetzen, die ein Gemsich unterschiedlicher Fettsäuren enthalten, wie vorzugsweise Pflanzenöle.

Beispielhaft genannt seien: Citronellöl, Nelkenöl, Patschouliöl, Rapsöl, Wacholderöl oder Kokosöl.

Die Zusammensetzungen der erfindungsgemäßen Mischungen aus den Verbindungen der allgemeinen Formel (I) und den Fettsäuren und/oder Fettsäurederivaten können über weite Bereich variiert werden. Die Mischungen enthalten die Verbindungen der allgemeinen Formel (I) vorzugsweise zu 1 bis 90, besonders bevorzugt zu 1 bis 50 und ganz besonders bevorzugt zu 1 bis 30 Gew.-%.

In einer besonderen Ausfuhrungsform können die erfindungsgemäßen Mischungen von Piperidin-Derivaten der Formel (I) mit Fettsäuren bzw. Fettsäurederivaten als Synergisten auch weitere Arthropodenabwehrmittel enthalten. Hierbei können alle üblicherweise verwendbaren Repellents eingesetzt werden (vgl. z.B. K.H. Büchel, Chemie der Pflanzenschutz- und Schädlingsbekämpfungsmittel; Hrsg.: R. Wegler, Bd. 1, Springer Verlag Berlin Herdelberg New York, 1970. S. 487 ff).

Dabei werden vorzugsweise repellente Carbonsäureamide, 1.3-Alkandiole, Carbonsäureester, Lacton-Derivate und am Stickstoff disubstituierte β-Alaninderivate verwendet. Im einzelnen seren beispielhaft genannt 3-Methylbenzoesäurediethylamid (Deet). Drethylphenylacetamid (DEPA), 2-Ethyl-hexandiol-1,3 (Rutgers 612), Phthalsäuredimethylester, 1,1,4,5,6,7,8,8a-Octahydro-3H-2-benzopyran-3-on und 3-(N-n-Butyl-N-acetyl)-aminopropionsäure-ethylester.

Die erfindungsgemäßen Mischungen können mit gutem Erfolg zur Abwehr von schädlichen oder lästigen saugenden und beißenden Arthropoden, bevorzugt Insekten, Zecken und Milben verwendet werden.

Zu den saugenden Insekten gehören im wesentlichen die Stechmücken (z.B. Aedes aegypti, Aedes vexans, Culex quinquefasciatus, Culex tarsalis, Anopheles albimanus, Anopheles gambiae, Anopheles stephensi, Mansonia

titillans), Schmetterlingsmücken (z.B. Phlebotomus papatasii), Gnitzen (z.B. Culicoides furens), Kriebelmücken (z.B. Simulium damnosum), Stechfliegen (z.B. Stomoxys calcitrans), Tsetse-Fliegen (z.B. Glossina morsitans morsitans), Bremsen (z.B. Tabanus nigrovittatus, Haematopota pluvialis, Chrysops caecutiens), Echte Fliegen (z.B. Musca domestica, Musca autumnalis, Musca vetustissima, Fannia canicularis), Fleischfliegen (z.B. Sarcophaga carnaria), Myiasis erzeugende Fliegen (z.B. Lucilia cuprina, Chrysomyia chloropyga, Hypoderma bovis, Hypoderma lineatum, Dermatobia hominis, Oestrus ovis, Gasterophilus intestinalis, Cochliomyia hominivorax), Wanzen (z.B. Cimex lectularius, Rhodnius prolixus, Triatoma infestans), Läuse (z.B. Pediculus humanis, Haematopinus suis, Damalina ovis), Flöhe (z.B. Pulex irritans, Xenopsylla cheopis, Ctenocephalides canis, Ctenocephalides felis) und Sandflöhe (Dermatophilus penetrans).

Zu den beißenden Insekten gehören im wesentlichen Schaben (z.B. Blattella germanica, Periplaneta americana, Blatta orientalis, Supella longipalpa), Käfer (z.B. Sitiophilus granarius, Tenebrio molitor, Dermestes lardarius, Stegobium paniceum, Anobium punctatum, Hylotrupes bajulus), Termiten (z.B. Reticulitermes lucifugus), Ameisen (z. B. Lasius niger, Monomorium pharaonis), Wespen (z.B Vespula germanica) und Larven von Motten (z.B. Ephestia elutella, Ephestia cautella, Plodia interpunctella, Hofmannophila pseudospretella, Tineola bisselliella, Tinea pellionella, Trichophaga tapetzella).

Zu den übrigen Arthropoden gehören Zecken (z.B. Ixodes ricinus, Argas reflexus, Ornithodorus moubata, Boophilius microplus, Amblyomma hebraeum) und Milben (z.B. Sarcoptes scabiei, Dermatophagoides pteronyssinus, Dermatophagoides farinae, Dermanyssus gallinae, Acarus siro).

Die erfindungsgemäßen Mischungen, die unverdünnt oder vorzugsweise verdünnt eingesetzt werden können, lassen sich in den für Repellents üblichen Formulierungen einsetzen.

Für die Anwendung am Menschen oder Tier sind dies Lösungen, Emulsionen, Gele, Salben, Pasten, Seifen, Schampoos, Cremes, Pulver, Stifte, getränkte Schwämme, Mikrokapseln, Sprays oder Aerosole aus Sprühdosen.

Speziell für den veterinärmedizinischen Bereich können die erfindungsgemäßen Mischungen als polymere Formkörper (z.B Ohrmarken, Halsbänder, Medaillons) formuliert werden.

Für die Anwendung in oder außerhalb von Gebäuden lassen sich die erfindungsgemäßen Mischungen in Granulate, Ölsprühmittel, organische und wasserbasierende Konzentrate oder slow release-Formulierungen einarbeiten.

Außerdem lassen sich die erfindungsgemäßen Mischungen in Verdampfersystemen einsetzen: Die Verbindungen befinden sich entweder auf einem Zelluloseplättchen, das auf einer elektrisch oder durch eine Flamme beheizten Platte liegt oder in einer Lösung in einem Reservoir, aus welchem sie mittels eines beheizten Dochtes in die Raumluft abgegeben werden. Statt des Zelluloseplättchens kann auch eine von einer Membran verschlossene Aluminiumwanne, in der sich die Verbindungen in Gelformulierung befinden, verwendet werden.

Die erfindungsgemäßen Mischungen können ferner in Moskito Coils oder Kerzen formuliert werden, wobei die Substanzen durch Abbrennen von der Brennstelle verdampfen.

Die Zubereitungen werden in bekannter Weise durch Vermischen oder Verdünnen der erfindungsgemäßen Mischungen mit Lösungsmitteln (z.B. Xylol, Chlorbenzole, Paraffine, Methanol, Ethanol, Isopropanol, Wasser), Trägerstoffe (z.B. Kaoline, Tonerde, Talkum, Kreide, hochdisperse Kieselsäure, Silikate), Emulgiermitteln (z.B. Polyoxyethylen-Fettsäure-Ester, Polyoxyethylen-Fettalkohol-Ether, Alkylsulfonate, Arylsulfonate) und Dispergiermitteln (z.B. Lignin-Sulfatablaugen, Methylcellulose) oder durch Einbringen in Mikrokapseln (z.B. auf Basis von Gummi arabicum, Gelatine, Harnstoff) hergestellt.

Die erfindungsgemäßen Mischungen werden in beliebigem Verhältnis eingesetzt und können in den Formulierungen miteinander gemischt, oder auch in Mischungen mit anderen bekannten Wirkstoffen (z.B. Sonnenschutzmittel) verwendet werden. Die Zubereitungen enthalten im allgemeinen zwischen 0,1 und 95 Gew-%, vorzugsweise zwischen 0,5 und 90 Gew-%, erfindungsgemäße Mischung.

Zum Schutz gegen die genannten Arthropoden werden die erfindungsgemäßen Mischungen entweder auf die menschliche oder tierische Haut oder Haare bzw. Fell aufgebracht oder Kleidungsstücke und andere Gegenstände damit behandelt.

Auch als Zusatz von Imprägniermitteln für z.B. Textilbahnen, Gardinen, Kleidungsstücke, Verpackungsmaterialien, sowie als Zusatz zu Polier-, Putz- und Fensterreinigungsmitteln sind die erfindungsgemäßen Mischungen geeignet.

Die folgenden allgemeinen Beispiele für die Zubereitungen und die Verwendung der erfindungsgemäßen Mischungen dienen der weiteren Erläuterung der Erfindung.

Formulierungsbeispiel 1

Ein Repellentmittel in Form einer Lotion zur Anwendung auf der menschlichen oder tierischen Haut wird hergestellt durch Vermischen von 20 Teilen einer der erfindungsgemäßen Mischungen, 1.5 Teilen Parfüm und 78.5 Teilen Isopropanol oder Ethanol.

Formulierungsbeispiel 2

Ein Repellentmittel in Form eines Aerosols zum Aufsprühen auf die menschliche oder tierische Haut setzt sich aus 40 % Wirkstofflösung (bestehend aus 20 Teilen einer der erfindungsgemäßen Mischungen, 1 Teil Parfüm und 79 Teilen Isopropanol) und 60 % Propan/Butan (Verhältnis 15:85) zusammen.

**Anwendungsbeispiele**

In den folgenden Anwendungsbeispielen werden eingesetzt:

a) Pyridin-Derivat der Formel (I):

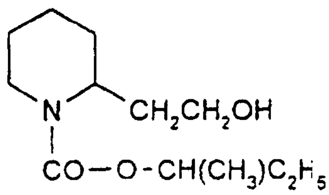

(I-1)

b) Synergist:

$C_8$-Fettsäure (Caprylsaure) oder
$C_{10}$-Fettsäure (Caprinsäure) oder
$C_8/C_{10}$-Fettsäuregemisch im Verhältnis 1 : 1

**Beispiel A**

**Als Repellent auf der Haut**

Methode

50 x 60 x 60 cm messende Gazekäfige enthalten gemischtgeschlechtliche Populationen aller Altersstufen, deren Anzahl ca. 5000 Mücken (Aedes aegypti) umfaßt. Die Tiere werden ausschließlich mit Zuckerwasser ernährt.

Ein Meerschweinchen, dessen Rücken am Vortag in einem Bereich von 50 $cm^2$ rasiert und danach mit Enthaarungscreme behandelt worden war (Creme anschließend mit Wasser entfernt), wird in einem Käfig (Box) so fixiert, daß nur die rasierte Fläche den Mücken zuganglich ist.

Nach Behandeln der Fläche mit 0,4 ml Präparat (erfindungsgemäße Mischung in Isopropanol) (mit Pipette) wird das Meerschweinchen samt Box in einen die Testtiere enthaltenden Käfig gestellt.

Es wird 5 Minuten lang beobachtet, wieviele Mücken das Meerschweinchen stechen. Anschließend wird dieses herausgenommen und der Test nach einer Stunde wiederholt. Der Versuch wird maximal 9 Stunden lang durchgeführt oder solange bis die Wirkung abbricht (> 5 Einstiche).

Pro Präparat werden 3 Versuchsglieder angelegt und nach Beendigung der Mittelwert pro Auswertungszeitpunkt berechnet.

Bricht bei einem Versuchsglied die Wirkung früher ab, wird der zuletzt ermittelte Wert für die folgenden Auswertungszeitpunkte fortgeschrieben und in die Berechnung der Mittelwerte der folgenden Auswertungszeitpunkte einbezogen.

Der Synergismus wird mit der Formel nach S.R. Colby; Weeds 15, 20-22, nachgewiesen:

$$E = X + Y - \frac{X \cdot Y}{100}$$

E = erwartete Schutzdauer der erfindungsgemäßen Mischung

X = tatsächliche Schutzdauer des Pyridin-Derivats der Formel (1) alleine

Y = tatsächliche Schutzdauer der Fettsäure(n) alleine

Ist E kleiner als die tatsächlich gefundene Schutzdauer der Mischung, so liegt ein Synergismus vor.

**Ergebnisse:**

Temperatur: 25 - 27 °C, rel. Luftfeuchte: ca. 60 %

Tabelle 1:

| Verbindung der Formel (I-1) mit $C_8/C_{10}$-Fettsäuregemisch; E = 5,95 h | | | | | | | | | | | |
|---|---|---|---|---|---|---|---|---|---|---|---|
| Präparat | Anzahl Einstiche am Meerschweinchen nach | | | | | | | | | | Schutzdauer |
| | 0 h | 1 h | 2 h | 3 h | 4 h | 5 h | 6 h | 7 h | 8 h | 9 h | |
| 1 % (I-1)<br>1 % $C_8/C_{10}$ | 0 | 0 | 0 | 2,0 | 4,7 | 5,3 | | | | | 5 h |
| 1%(I-1)<br>2 % $C_8/C_{10}$ | 0 | 0 | 0 | 1,0 | 4,0 | 4,0 | 4,0 | 4,3 | 4,0 | 5,7 | 9 h |
| 2 % (I-1)<br>1 % $C_8/C_{10}$ | 0 | 0,3 | 0,3 | 0 | 1,7 | 1,7 | 3,0 | 6,7 | | | 7 h |
| 2 % (I-1)<br>2 % $C_8/C_{10}$ | 0 | 0 | 0,3 | 0 | 0,7 | 1,3 | 3,3 | 4,3 | 4,3 | 5,3 | 9 h |
| 2 % (I-1)<br>ohne Zusatz | 0,7 | 0 | 0,3 | 0,3 | 4,3 | 6,0 | | | | | 5 h |
| 2 % $C_8/C_{10}$<br>alleine | 0,5 | 8,5 | | | | | | | | | 1 h |

Tabelle 2:

| Verbindung der Formel (I-1) mit $C_8$-Fettsäure; E = 5,00 h | | | | | | | | | |
|---|---|---|---|---|---|---|---|---|---|
| Präparat | Anzahl Einstiche am Meerschweinchen nach | | | | | | | | Schutzdauer |
| | 0 h | 1 h | 2 h | 3 h | 4 h | 5 h | 6 h | 7 h | |
| 2 % (I-1)<br>1 % $C_8$ | 0 | 0,3 | 0,3 | 0,3 | 0,3 | 1,3 | 2,3 | 7,7 | 7 h |
| 2 % (I-1)<br>2 % $C_8$ | 0 | 0 | 0 | 1,0 | 2,3 | 4,7 | 4,7 | 6,3 | 7 h |
| 2 % (I-1)<br>ohne Zusatz | 0 | 0 | 0,7 | 1,0 | 2,3 | 6,7 | | | 5 h |
| 2 % $C_8$<br>alleine | 7,0 | | | | | | | | 0 h |

Tabelle 3:

| Verbindung der Formel (I-1) mit $C_{10}$-Fettsäure; E = 5,00 h | | | | | | | | | |
|---|---|---|---|---|---|---|---|---|---|
| Präparat | Anzahl Einstiche am Meerschweinchen nach | | | | | | | | Schutzdauer |
| | 0 h | 1 h | 2 h | 3 h | 4 h | 5 h | 6 h | 7 h | |
| 2 % (I-1)<br>1 % $C_{10}$ | 0 | 0,3 | 0,3 | 1,0 | 3,3 | 4,7 | 6,3 | | 6 h |
| 2 % (I-1)<br>2 % $C_{10}$ | 0 | 0 | 0 | 0,3 | 1,0 | 3,7 | 3,7 | 8,3 | 7 h |
| 2 % (I-1)<br>ohne Zusatz | 0 | 0 | 0,3 | 2,0 | 4,7 | 6,0 | | | 5 h |

Tabelle 3: (fortgesetzt)

| Verbindung der Formel (I-1) mit $C_{10}$-Fettsäure; E = 5,00 h | | | | | | | | | |
|---|---|---|---|---|---|---|---|---|---|
| Präparat | Anzahl Einstiche am Meerschweinchen nach | | | | | | | | Schutzdauer |
| | 0 h | 1 h | 2 h | 3 h | 4 h | 5 h | 6 h | 7 h | |
| 2 % $C_{10}$ alleine | 8,0 | | | | | | | | 0 h |

**Beispiel B**

**Als Repellent in Verdampfersystemen**

Methode

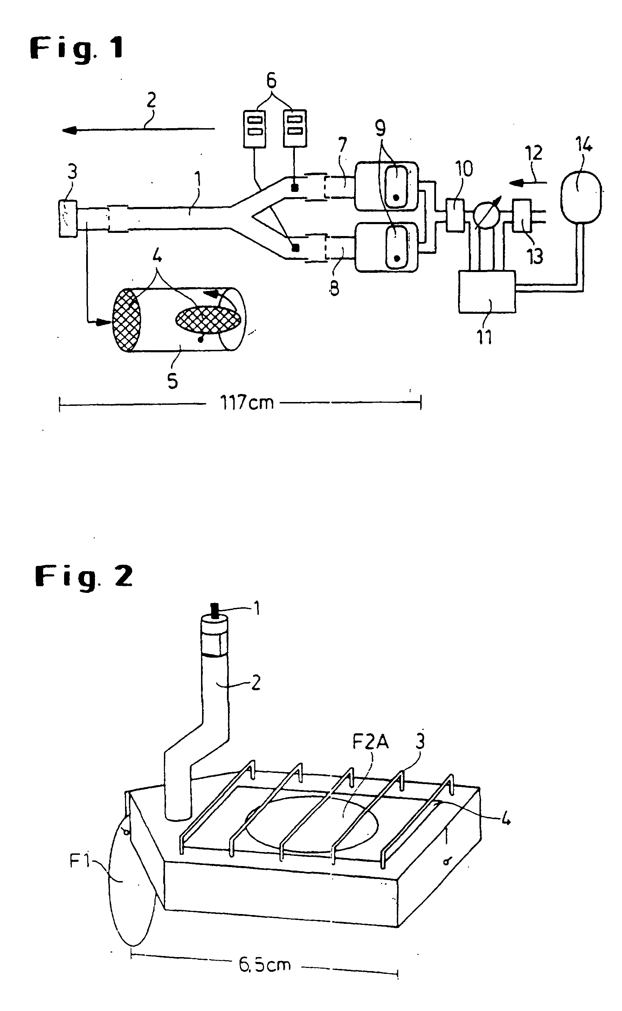

Die Versuche werden in einem Y - Olfaktometer gemäß Figur 1 durchgeführt:

1 = Y-Rohr
2 = (Strömung (20-30 cm/s)/Temperatur 27-29°C/ Rel. Feuchtigkeit 70-80 %
3 = Ventilator
4 = Gaze
5 = Mückendose (vom Y-Rohr abnehmbar)
6 = Temperatur- und Feuchtigkeitsfühler
7 = K-Dose
8 = T-Dose
9 = Öffnung für Reizgebung
10 = Heizelement
11 = Wasserbad
12 = Preßluft
13 = Aktivkohlefilter
14 = Wasserzufuhr

Eine Mückendose mit 20 - 30 mittels Hand aus einem Käfig hineingelockten Mücken (Aedes aegypti) wird wie aus Figur 1 ersichtlich links am Olfaktometer befestigt (Gaze geschlossen). Nach 10 Minuten Eingewöhnungszeit wird bei der T-Dose in die Öffnung für die Reizgebung ein Heizöfchen (Plattentemperatur 110°C) gehängt, auf dem sich ein Hautextrakt (attraktive Reizquelle) oder 0,1 ml Präparat (erfindungsgemäße Mischung in Methanol) + Hautextrakt auf Filterpapier befinden (Figur 2):

1 = Kabel
2 = Vorrichung zum Aufhängen im Ölfaktometer
3 = Gitter
4 = Heizplatte
F1 = Filterscheibe mit Hautextrakt
F2A = Filterscheibe mit Präparat auf Heizplatte

Nach 1 Minute werden die Mückendosen geschlossen, das Öfchen entfernt und die Mücken in den Dosen gezählt.

Die Berechnung der Wirkung erfolgt nach folgender Formel

$$\frac{\text{(Anz. in T-Dose) - (Anz. in K-Dose : 2) - (Anz. außerhalb)}}{\text{Gesamtzahl}} \times 100$$

+ 100 bedeutet höchste Attraktivität (alle Mucken in T-Dose), - 100 starkste Repellenz (alle Mücken außerhalb).

Nach dem Test werden die Mücken entfernt und nach 10 Minuten Leerlauf des Olfaktometers neue Mücken eingesetz, die wiederum 10 Minuten eingewöhnt werden.

Eine Testreihe wird mit Hautextrakt begonnen, anschließend wird das Präparat + Hautextrakt getestet und

anschließend wieder der Hautextrakt.

Der Synergismus wird mit der oben beschriebenen Formel nach S.R Colby; Weeds 15, 20-22, nachgewiesen

**Ergebnisse:**

Temperatur. 26 - 28 °C, rel. Luftfeuchte: ca. 75 %

Tabelle 1:

| Verbindung der Formel (I-1) mit $C_8/C_{10}$-Fettsäuregemisch; | | | E = - 51,96 |
|---|---|---|---|
| Präparat | | | Wirkung |
| | nur | Hautextrakt | + 73 |
| 1,0 mg (I-1)<br>1,0 mg $C_8/C_{10}$ | + | Hautextrakt | - 73 |
| 1,0 mg (I-1)<br>ohne Zusatz | + | Hautextrakt | - 16 |
| 1,0 mg $C_8/C_{10}$<br>alleine | + | Hautextrakt | - 31 |
| | nur | Hautextrakt | + 93 |

Tabelle 2:

| Verbindung der Formel (I-1) mit $C_8$-Fettsäure; | | | E = + 37,10 |
|---|---|---|---|
| Präparat | | | Wirkung |
| | nur | Hautextrakt | + 87 |
| 1 mg (I-1)<br>1 mg $C_8$ | + | Hautextrakt | - 22 |
| 1 mg (I-1)<br>ohne Zusatz | + | Hautextrakt | + 26 |
| 1 mg $C_8$<br>alleine | + | Hautextrakt | + 15 |
| | nur | Hautextrakt | + 75 |

Tabelle 3:

| Verbindung der Formel (I-1) mit $C_{10}$-Fettsäure; | | | E = - 24,32 |
|---|---|---|---|
| Präparat | | | Wirkung |
| | nur | Hautextrakt | + 75 |
| 1 mg (I-1)<br>1 mg $C_{10}$ | + | Hautextrakt | - 85 |
| 1 mg (I-1)<br>ohne Zusatz | + | Hautextrakt | + 16 |
| 1 mg $C_{10}$<br>alleine | + | Hautextrakt | - 48 |
| | nur | Hautextrakt | + 73 |

**Patentansprüche**

1. Arthropoden abwehrende Mittel, gekennzeichnet durch einen Gehalt einer Wirkstoffkombination aus Piperidin-De-

rivaten der Formel (I)

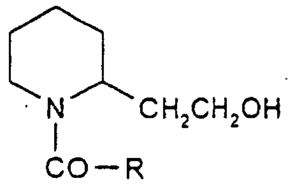

(I)

in welcher

R für Alkyl oder Alkoxy steht,

und als Synergist Fettsäuren und/oder Fettsäurederivaten.

2. Arthropoden abwehrende Mittel mit einem Gehalt einer Wirkstoffkombination aus Piperidin-Derivaten der Formel (I) gemäß Anspruch 1 und Fettsäuren und/oder Fettsäurederivaten, **dadurch gekennzeichnet, daß** R in Formel (I) für $C_1$-$C_4$-Alkyl oder $C_1$-$C_4$-Alkoxy steht.

3. Arthropoden abwehrende Mittel, **gekennzeichnet durch** einen Gehalt einer Wirkstoffkombination aus Piperidin-Derivaten der Formeln

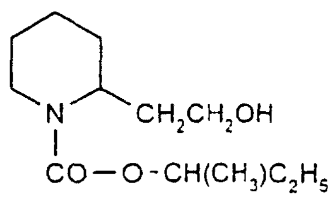

(I-1),

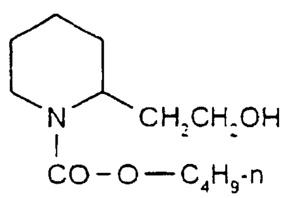

(I-2),

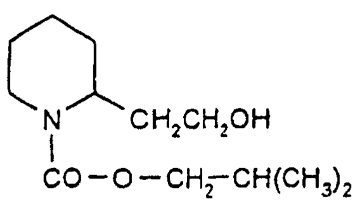

(I-3),

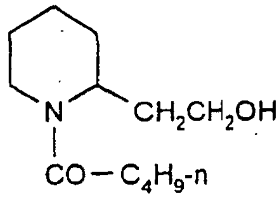

(I-4)

oder

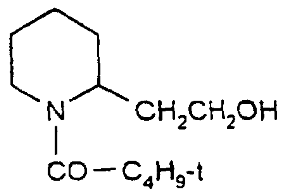

(I-5)

und als Synergist Fettsäuren und/oder Fettsaurederivaten.

4. Arthropoden abwehrende Mittel gemäß den Ansprüchen 1 bis 3, **dadurch gekennzeichnet, daß** als Synergisten geradzahlige, geradkettige höhere Fettsäuren und/oder deren Derivate verwendet werden.

5. Arthropoden abwehrende Mittel gemäß Anspruch 4, **dadurch gekennzeichnet, daß** als Synergisten Caprylsäure ($C_8$), Caprinsäure ($C_{10}$) und/oder deren Alkylester eingesetzt werden.

6. Arthropoden abwehrende Mittel gemäß Anspruch 5, **dadurch gekennzeichnet, daß** als Synergisten Caprylsäuremethylester und/oder Caprinsäuremethylester verwendet werden.

7. Arthropoden abwehrende Mittel gemäß den Ansprüchen 1 bis 5, **dadurch gekennzeichnet, daß** diese ein Gemisch unterschiedlicher Fettsäuren enthalten.

8. Arthropoden abwehrende Mittel gemäß Anspruch 7, **dadurch gekennzeichnet, daß** diese die unterschiedlichen Festsäuren in Form von Pflanzenölen enthalten.

9. Arthropoden abwehrende Mittel gemäß Anspruch 8, **dadurch gekennzeichnet, daß** als Pflanzenöle Citronellöl, Nelkenöl, Patschouliöl, Rapsöl oder Wacholderöl verwendet werden.

10. Arthropoden abwehrende Mittel gemäß den Ansprüchen 1 bis 9, **gekennzeichnet durch** einen Gehalt zwischen 0,1 und 95 Gew.-% Wirkstoffkombination.

11. Verwendung von Piperidin-Derivaten der Formel (I) gemäß Anspruch 1 zusammen mit Fettsäuren und/oder Fettsäurederivaten als Synergist zur Abwehr von Arthropoden.

12. Verfahren zur Abwehr von Arthropoden, **dadurch gekennzeichnet, daß** man Piperidin-Derivate der Formel (I) gemäß Anspruch 1 in Mischung mit Fettsäuren und/oder Fettsäurederivaten als Synergist auf diese einwirken läßt.

**Claims**

1. Arthropod repellents, **characterized in that** they comprise an active compound combination of piperidine derivatives of the formula (I)

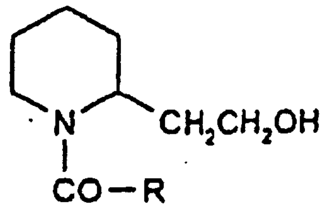

(I)

in which

R represents alkyl or alkoxy,

and fatty acids and/or fatty acid derivatives as synergist.

2. Arthropod repellents comprising an active compound combination of piperidine derivatives of the formula (I) according to Claim 1 and fatty acids and/or fatty acid derivatives, **characterized in that** R in formula (I) represents $C_1$-$C_4$-alkyl or $C_1$-$C_4$-alkoxy.

3. Arthropod repellents, **characterized in that** they comprise an active compound combination of piperidine derivatives of the formulae

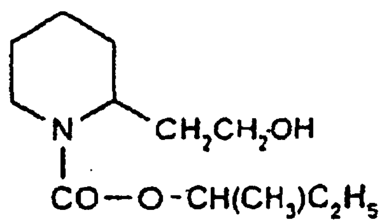

(I-1),

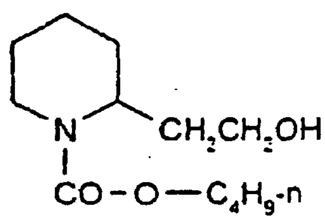

(I-2),

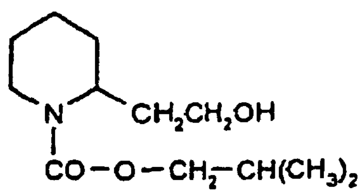

(I-3),

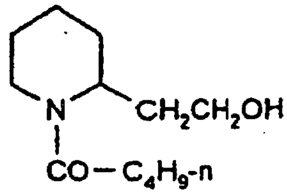

(I-4)

or

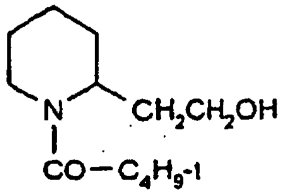

(I-5)

and fatty acids and/or fatty acid derivatives as synergist.

**4.** Arthropod repellents according to Claims 1 to 3, **characterized in that** the synergists used are even-numbered, straight-chain higher fatty acids and/or their derivatives.

**5.** Arthropod repellents according to Claim 4, **characterized in that** the synergists used are caprylic acid ($C_8$), capric acid ($C_{10}$) and/or their alkyl esters.

**6.** Arthropod repellents according to Claim 5, **characterized in that** the synergists used are methyl caprylate and/or methyl caprate.

**7.** Arthropod repellents according to Claims 1 to 5, **characterized in that** they comprise a mixture of various fatty acids.

**8.** Arthropod repellents according to Claim 7, **characterized in that** they comprise the various fatty acids in the form of vegetable oils.

**9.** Arthropod repellents according to Claim 8, **characterized in that** the vegetable oils used are citronella oil, clove oil, patchouli oil, rapeseed oil or juniper oil.

**10.** Arthropod repellents according to Claims 1 to 9, **characterized in that** the active compound combination which they comprise amounts to between 0.1 and 95% by weight.

**11.** The use of piperidine derivatives of the formula (I) according to Claim 1 together with fatty acids and/or fatty acid derivatives as synergist for repelling arthropods.

**12.** Method for repelling arthropods, **characterized in that** piperidine derivatives of the formula (I) according to Claim 1 in a mixture with fatty acids and/or fatty acid derivatives as synergist are allowed to act on them.

**Revendications**

**1.** Compositions repoussant les arthropodes, **caractérisées par** une teneur en une association de substances actives formée de dérivés de pipéridine de formule (I)

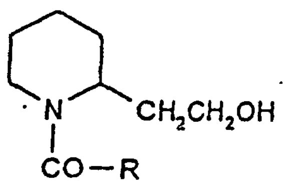

(I)

dans laquelle

R est un groupe alkyle ou alkoxy,

avec comme agent synergique des acides gras et/ou des dérivés d'acides gras.

2. Compositions repoussant les arthropodes ayant une teneur en une association de substances actives formée de dérivés de pipéridine de formule (I) suivant la revendication 1 et d'acides gras et/ou de dérivés d'acides gras, **caractérisées en ce que** R dans la formule (I) représente un groupe alkyle en $C_1$ à $C_4$ ou un groupe alkoxy en $C_1$ à $C_4$.

3. Compositions repoussant les arthropodes, **caractérisées par** une teneur en une association de substances actives formée de dérivés de pipéridine de formules

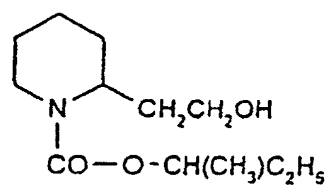

(I-1),

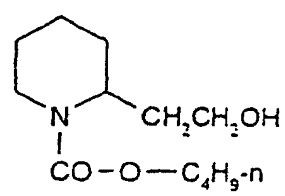

(I-2),

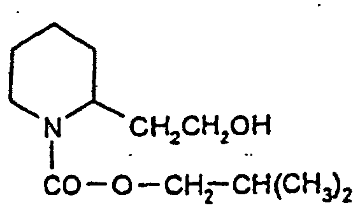

(I-3),

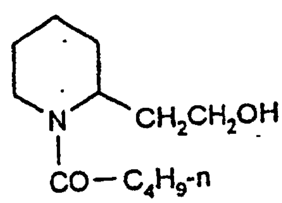

(I-4)

ou

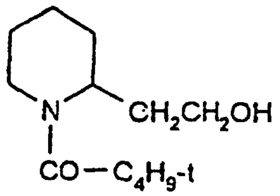

(I-5)

avec comme agent synergique des acides gras et/ou des dérivés d'acides gras.

**4.** Compositions repoussant les arthropodes suivant les revendications 1 à 3, **caractérisées en ce qu'**on utilise comme agents synergiques des acides gras supérieurs linéaires à nombre pair et/ou leurs dérivés.

**5.** Compositions repoussant les arthropodes suivant la revendication 4, **caractérisées en ce qu'**on utilise comme agents synergiques l'acide caprylique ($C_8$), l'acide caprique ($C_{10}$) et/ou leurs esters d'alkyle.

**6.** Compositions repoussant les arthropodes suivant la revendication 5, **caractérisées en ce qu'**on utilise comme agents synergiques l'ester méthylique d'acide caprylique et/ou l'ester méthylique d'acide caprique.

**7.** Compositions repoussant les arthropodes suivant les revendications 1 à 5, **caractérisées en ce qu'**elles contiennent un mélange de différents acides gras.

**8.** Compositions repoussant les arthropodes suivant la revendication 7, **caractérisées en ce qu'**elles contiennent les différents acides gras sous forme d'huiles végétales.

**9.** Compositions repoussant les arthropodes suivant la revendication 8, **caractérisées en ce qu'**on utilise comme huiles végétales l'essence de citronnelle, l'essence de girofle, l'huile de patchouli, l'huile de colza ou l'essence de genièvre.

**10.** Compositions repoussant les arthropodes suivant les revendications 1 à 9, **caractérisées par** une teneur en association de substances actives comprise entre 0,1 et 95 % en poids.

**11.** Utilisation de dérivés de pipéridine de formule (I) suivant la revendication 1 conjointement avec, comme agent synergique, des acides gras et/ou des dérivés d'acides gras, pour repousser des arthropodes.

**12.** Procédé pour repousser des arthropodes, **caractérisé en ce qu'**on fait agir sur les arthropodes des dérivés de pipéridine de formule (I) suivant la revendication 1 en mélange avec, comme agent synergique, des acides gras et/ou des dérivés d'acides gras.

Fig. 1

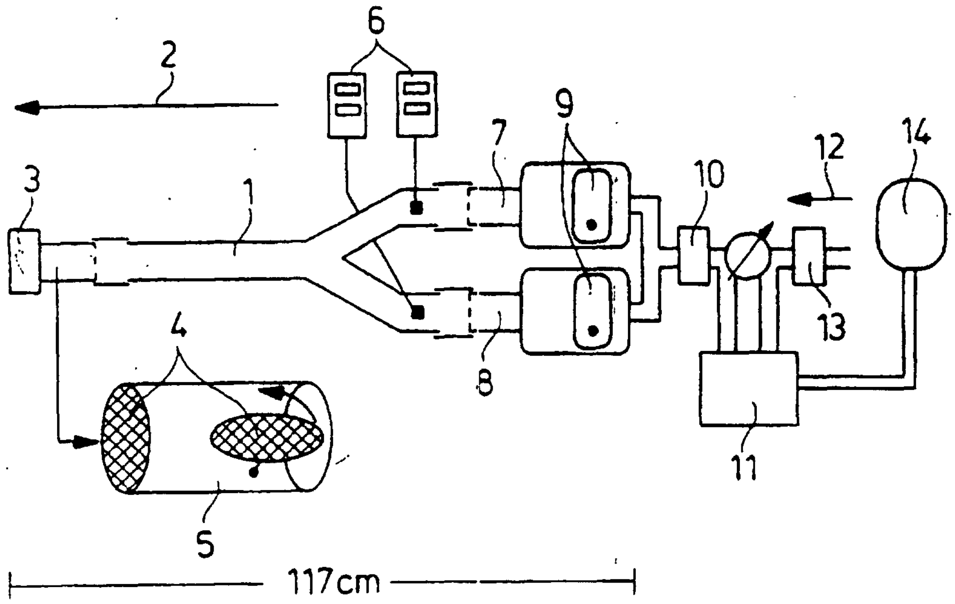


Fig. 2